**Europäisches Patentamt**

**European Patent Office**

**Office européen des brevets**

(11) Veröffentlichungsnummer: **0 253 915**
**B1**

(12) **EUROPÄISCHE PATENTSCHRIFT**

(45) Veröffentlichungstag der Patentschrift:
**28.06.89**

(51) Int. Cl.⁴: **A21B 3/13**

(21) Anmeldenummer: **86110128.5**

(22) Anmeldetag: **23.07.86**

(54) Backform.

(43) Veröffentlichungstag der Anmeldung:
**27.01.88 Patentblatt 88/4**

(45) Bekanntmachung des Hinweises auf die Patenterteilung:
**28.06.89 Patentblatt 89/26**

(84) Benannte Vertragsstaaten:
**AT BE CH DE FR GB IT LI LU NL SE**

(56) Entgegenhaltungen:
**EP-A- 0 008 988**
**DE-B- 488 267**
**FR-A- 2 568 750**
**GB-A- 2 148 102**
**US-A- 3 385 205**
**US-A- 4 047 477**
**US-A- 4 190 229**

(73) Patentinhaber: **Pietschmann, Bruno, Siemensstrasse 20,
D-2084 Rellingen 1(DE)**

(72) Erfinder: **Pietschmann, Bruno, Siemensstrasse 20,
D-2084 Rellingen 1(DE)**

(74) Vertreter: **Fleck, Thomas, Dr.Dipl.-Chem. et al,
Patentanwälte Raffay, Fleck & Partner
Postfach 32 32 17, D-2000 Hamburg 13(DE)**

**Beschreibung**

Die vorliegende Erfindung betrifft eine Backform. Im Stand der Technik sind unterschiedlichste Backformen bekannt, von denen die nächstliegende in der US-A 4 190 229 beschrieben wird, welche jedoch mehrere schwerwiegende Mängel aufweist.

So kann z.B. nach dem Backvorgang die fertige Backware nicht mehr von dem den innenliegenden rinnenartigen Bereich formenden Teil abgezogen werden, da sie nämlich teilweise durch dessen Birnenform beschädigt bzw. zerstört wird, weil diese einen mittleren erweiterten Bereich und einen oberen schmalen Hals besitzt.

Außerdem führen die Laschen und weitere Formgebungsglieder zwangsläufig zu einer begrenzten Ausnehmung in der fertigen Backware, so daß vollständig durchgehende rinnenartige Strukturen nicht erzeugt werden können, die eine anschließende Teilung in gleiche, kleinere Stücke ermöglichen. Ferner kann die Füllung, z.B. Wurst, nicht über die Brötchenenden hinaus durchgehend eingelegt werden, was eine schlechte Handhabung beim Verzehr zur Folge hat.

Von besonderer Bedeutung ist jedoch die Tatsache, daß die aus obiger U.S. vorbekannte Backform aus einer Vielzahl von Einzelteilen besteht, nämlich aus einem Unterteil, einem Oberteil mit dem Birnenformteil und einer Vielzahl von ovalen Formgebungsgliedern.

Gerade der manuelle Aufwand beim Einsetzen solcher einzelnen Formgebungsglieder macht eine Massenproduktion aus technischer Sicht unmöglich.

Nachteilig ist weiter, daß die vorbekannte Backform keinesfalls eine gute Heißluftzirkulation bewirkt, da im eigentlichen Sinne keine Schlitze oder Bohrungen vorgesehen sind, sondern nur zwei relativ offene Bereiche einen Luftaustritt ausschließlich nach oben ermöglichen.

Der vorliegenden Erfindung liegt deshalb die Aufgabe zugrunde, die vorbekannte Backform derart zu verbessern, daß sie die eben geschilderten Nachteile vermeidet. Die Backform sollte einfach im Aufbau und preiswert in der Herstellung sein und gleichzeitig eine einfache und schnelle Massenproduktion ermöglichen und eine Backware liefern, die sich in der Zubereitung mit anderen Esswaren leicht und schnell handhaben läßt und darüber hinaus eine anschliessende Teilung in gleiche, kleinere Stücke ermöglicht.

Diese Aufgabe wird durch die Backform mit den Merkmalen gemäß Anspruch 1 gelöst.

Die erfindungsgemäße Backform stimmt den Aufbau von Ober- und Unterteil derart aufeinander ab, so daß die Backware nach erfolgtem Backvorgang sich leicht beschädigungsfrei aus der innenliegenden rinnenförmigen Formgebung der Backform entnehmen läßt. Von besonderer erfindungsgemäßer Bedeutung ist die Tatsache, daß die erfindungsgemäße Backform lediglich zweiteilig ist und auf den Einsatz vieler Einzelteile verzichten kann, da die Fächer selbst der äußeren Formgebung der Backware dienen. Hierzu sind die Fächer im Höhenquerschnitt erfindungsgemäß mehreckig oder halbrund gestaltet. Sie weisen entsprechend zum Oberteil ebenfalls Schlitze oder lochförmige Bohrungen auf, wodurch eine allseitige und vollständige Heißluftzirkulation erzielt wird, so daß die Konsistenz der Brötchen möglichst einheitlich ist, d.h. daß der beim Backen auftretende Wasserdampf optimal aus der Backform entweichen kann.

Vorteilhafterweise ist sichergestellt, daß die rinnenartige Struktur vollständig von einem zum anderen Ende des Brötchens durchgeht, so daß eine anschließende Teilung in gleiche, kleinere Stücke, für eine Massenproduktion ermöglicht wird. Bei Hot Dogs kann z.B. die Wurst dann in ihrer Längenabmessung größer als das Brötchen sein, so daß ein leichterer Verzehr bei besserer Optik gewährleistet ist.

Es dürfte einleuchten, daß die erfindungsgemäß zweiteilige Backform gerade zur Massenherstellung von Hot-Dog-Brötchen hervorragend geeignet ist, da auf zeitraubende manuelle Einsatzarbeiten verzichtet werden kann.

Weitere Vorteile und Merkmale gehen aus den vorstehenden Unteransprüchen hervor, die einzeln oder auch gemeinsam mit dem Hauptanspruch von erfindungsgemäßer Bedeutung sein können.

Im folgenden wird ein bevorzugtes Ausführungsbeispiel der erfindungsgemäßen Backform anhand der Zeichnung näher erläutert.

Es zeigt:

Fig. 1 eine Ansicht des Oberteils der erfindungsgemäßen Backform im Maßstab 1:50;

Fig. 2 eine Ansicht des Unterteils der erfindungsgemäßen Backform,

Fig. 3 eine schematische Schnittdarstellung der mit der erfindungsgemäßen Backform gefertigten Backware, und

Fig. 4 eine schematische, perspektivische Ansicht der Backware mit einem Würstchen.

Fig. 5 eine Seitenansicht des in Fig. 1 gezeigten Oberteils;

Fig. 6 einen Längsquerschnitt durch das in Fig. 2 gezeigte Unterteil;

Fig. 7 einen Seitenquerschnitt durch das in Fig. 2 gezeigte Unterteil;

Fig. 8 einen Längsquerschnitt durch das in Fig. 1 gezeigte Oberteil.

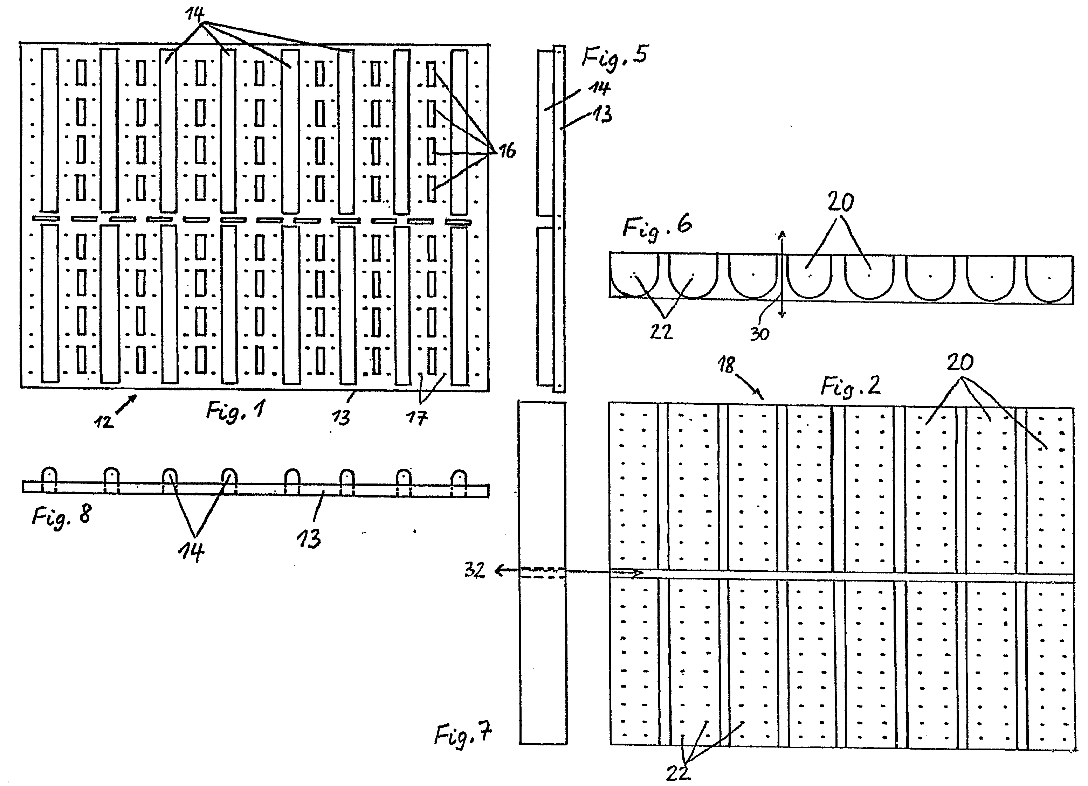

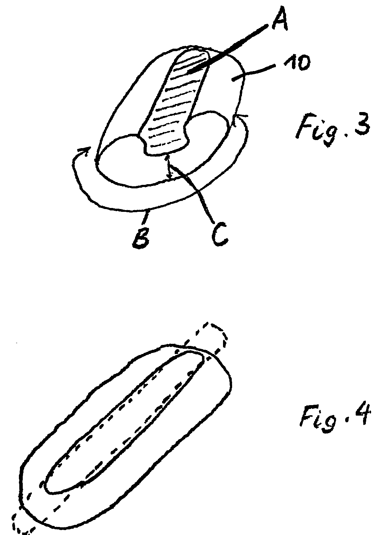

In Fig. 1 ist das Oberteil der erfindungsgemäßen Backform allgemein mit dem Bezugszeichen 12 versehen. Es besteht aus einer im wesentlichen rechteckigen Platte 13, auf der in Querrichtung beabstandet voneinander jeweils U-förmige Stege 14 in einer Zweieranordnung befestigt sind. Zwischen den Stegen sind mehrere Schlitze 16 und Bohrungen 17 angeordnet, die den Durchtritt der Heißluft ermöglichen. Die Stege 14 geben in Zusammenwirkung mit den Fächern 20 des in Fig. 2 gezeigten Unterteils 18 der Backware 10 ihre innenliegende rinnenartige Formgebung, die in Fig. 3 schraffiert dargestellt und mit A bezeichnet worden ist. Demgegenüber bewirkt die Ausgestaltung der Fächer 20 die äußere Formgebung der Backware, wie es durch den Doppelpfeil B in Fig. 3 angedeutet ist. Es dürfte einleuchten, daß die erfindungsgemäße Backform nicht auf das in Fig. 4 gezeigte Ausführungsbeispiel eines Hot-Dogs's (Würstchen in gestrichelter Form gezeigt) beschränkt ist, da die Abänderung der Form der Stege 14 und/oder die Ausgestaltung der Fächer 20 sich in einem breiten Rahmen variieren läßt, so daß beispielsweise auch Fischstäbchen (nicht gezeigt) von einer entsprechend eckiger gestalteten U-förmigen Backware paßgerecht aufgenommen werden könnten. Auch ist es denkbar, die rinnenartige Struktur nicht durchgehend, sonder kürzer als die Gesamtlänge der Backware zu gestalten.

Ferner versteht es sich, daß die Stege 14 nicht nur die Form des inneren Teils der Backware, sondern auch durch ihre Höhe entsprechend die Dicke C der Backware bewirken, wie sie durch den Doppelpfeil in Fig. 3 angedeutet ist.

Das in Fig. 2 gezeigte Unterteil 18 weist im Ausführungsbeispiel eine rechteckige Kastenform auf, in der eine Vielzahl rechteckiger Fächer ebenfalls in Zweieranordnung vorgesehen ist. Die Fächer 20 sind im Querschnitt U-förmig. Auch in diesem Fall dürfte es jedoch einleuchten, daß das Unterteil 18 als Gegenform des Oberteils 12 sich im breiten Rahmen in seiner Form verändern läßt. Es kann dreieckig (V-förmig) oder viereckig bzw. vieleckig sein. Andererseits kann die U-Form nach oben hin weiter geschlossen werden, sofern die Stege 14 von oben jeweils noch in ihr entsprechendes Fach 20 hineinragen können. Die Backform ist zur Heißluftzirkulation oben und unten offen, wie dieses durch die Doppelpfeile 30 und 32 angedeutet ist (vgl. Fig. 2, 6, 7). Im Unterteil 18 sind die lochförmigen Bohrungen 22 sowohl in doppelter Reihe in Längsrichtung (vgl. Fig. 2) als auch in halber Höhe auf der Seite (vgl. Fig. 6) vorgesehen.

**Patentansprüche**

1. Backform, die aus einem im wesentlichen rechteckigen Unterteil (18) und aus einem paßgerechten Oberteil (12) besteht, wobei das letztere (12) das Unterteil (18) vollständig abdeckt und aus einer auch im wesentlichen rechteckigen Platte (13) besteht, auf der in Querrichtung beabstandet voneinander jeweils Stege (14) zur innenliegenden Formgebung der Backware (10) vorgesehen sind, wobei zwischen den Stegen (14) Schlitze (16) zur Heißluftzirkulation angeordnet sind, während das Unterteil (18) eine den Stegen (14) entsprechende Anzahl von im Höhenquerschnitt mehreckig oder halbrund gestalteten Fächern (20) besitzt, die zur äußeren Formgebung der Backware dienen und ebenfalls mit Schlitzen und/oder lochförmigen Bohrungen (22) zur Heißluftzirkulation versehen sind, wobei die Stege (14) eine solche Form aufweisen, so daß sie nach erfolgtem Backvorgang aus der innenliegenden rinnenartigen Formgebung der Backware (10) zerstörungsfrei herausnehmbar sind.

2. Backform nach Anspruch 1, dadurch gekennzeichnet, daß die Fächer (20) eine im wesentlichen rechteckige Form aufweisen und im Querschnitt U-förmig sind.

3. Backform nach Anspruch 3, dadurch gekennzeichnet, daß die Fächer (20) geringfügig voneinander beabstandet sind.

4. Backform nach Anspruch 1 bis 3, dadurch gekennzeichnet, daß die Höhe der Stege (14) geringer ist als die Höhe des jeweiligen Faches (20), insbesondere etwa ein Viertel bis zwei Drittel der Höhe des Faches (20) ist.

5. Backform nach einem oder mehreren der vorstehenden Ansprüche, dadurch gekennzeichnet, daß die Länge der Stege (14) in etwa der Länge des jeweiligen Faches (20) entspricht.

6. Backform nach einem oder mehreren der vorstehenden Ansprüche, dadurch gekennzeichnet, daß das Unter- und Oberteil (18 bzw. 20) eine Höhe im Bereich von 15 bis 200 mm und eine Länge bis zu 3000 mm aufweisen und aus Stahlblech bestehen.

7. Backform nach Anspruch 1, dadurch gekennzeichnet, daß die Stege (14) einen durchgehenden rinnenartigen Bereich in Stangenform erzeugen, so daß maschinell kleinere, angepaßte Stücke der Backware herstellbar sind.

**Claims**

1. Baking mould consisting of an essentially rectangular bottom-half (18) and a matching top half (12) whereby the latter (12) completely covers the bottom half (18), and an essentially rectangular plate (13) on which at certain distance from each other, in cross-direction, there are provided ribs (14) for the inner shaping of the baked product (10), whereby between the ribs (14) there are slits (16) for the circulation of hot air, while the bottom half (18) has a number of compartments (20) of polygonal or semi-circular shape in their altitudinal cross-section, corresponding to the number of ribs (14), serving to give the baked product its external shape and being likewise provided with slits and/or hole-like drillings (22) for the circulation of hot air, the ribs (14) showing such a shape that after baking they may be removed from the inner groove-like forming part of the baked product (10), free from damage.

2. Baking mould as per claim 1, distinguished by the compartments (20) having an essentially rectangular shape and being U-shaped in their cross-section.

3. Baking mould as per claim 2, distinguished by the compartments (20) being in slight distance from each other.

4. Baking mould as per claims 1–3, distinguished by the height of the ribs (14) being lower than the height of the corresponding compartment (20), especially being abt. a quarter up to two thirds of the height of the compartment (20).

5. Baking mould as per one or several of the aforementioned claims, distinguished by the length of the ribs (14) corresponding abt. to the length of the pertaining compartment (20).

6. Baking mould as per one or several of the aforementioned claims, distinguished by the lower and the upper part (18 respectively 20) having a height of between 15 and 200 mm and a length of up to 3000 mm, and consisting of steel sheet.

7. Baking mould as per claim 1, distinguished by the ribs (14) producing a continuous groove-like area in form of a stick, so that smaller, adapted parts of the baked product may be mecanically produced.

## Revendications

1. Moule qui consiste en une partie inférieure (18) dans l'ensemble rectangulaire et en une partie supérieure (12) adaptée parfaitement à sa forme, cette dernière (12) couvrant complètement la partie inférieure (18), et en une plaque (13) dans l'ensemble rectangulaire sur laquelle sont prévues en sens traversal, distantes les unes des autres, des arêtes dorsales (14) destinées au moulage inférieur du produit (10), entre les arêtes dorsales (14) étant disposées des fentes (16) permettant la circulation d'air chaud tandis que la partie inférieure (18) possède un certain nombre de cases (20) correspondant au nombre des arêtes dorsales (14) et présentant une forme polygonale ou demi-circulaire en profil longitudinal qui servent au moulage extérieur du produit et qui sont également pourvues de fentes et/ou de perçages en forme de trou (22) destinés à la circulation d'air chaud, les arêtes dorsales (14) ayant une forme permettant de les retirer sans dommage du moulage cannelé intérieur du produit (10) après la cuisson.

2. Moule selon la revendication 1 caractérisé en ce que les cases (20) ont une forme dans l'ensemble rectangulaire et que de profil elles se présentent en forme d'U.

3. Moule selon la revendication 3 caractérisé en ce que les cases (20) se trouvent à petite distance les unes des autres.

4. Moule selon la revendication 1 à 3 caractérisé en ce que la hauteur des arêtes dorsales (14) est plus petite que la hauteur de la case correspondante (20), à savoir entre un quart et deux tiers de la hauteur de la case (20).

5. Moule selon une ou plusieurs des revendications précitées caractérisé en ce que la longueur des arêtes dorsales (14) correspond à peu près à la longueur de la case correspondante (20).

6. Moule selon une ou plusieurs des revendications précitées caractérisé en ce que la partie inférieure et la partie supérieure (respectivement 18 et 20) ont une hauteur allant de 15 à 200 mm et une longueur allant jusqu'à 3000 mm et qu'elles sont faites de tôle d'acier.

7. Moule selon la revendication 1 caractérisé en ce que les arêtes dorsales (14) produisent une zone continue cannelée présentant une forme de baguette permettant ainsi la production mécanique de parts plus petites et de taille appropriée du produit.

14

16

Fig. 5
14
13

Fig. 6
20
22
30

12
Fig. 1
13
17

18
Fig. 2
20

Fig. 8
14
13

32

Fig. 7

22

EP 0 253 915 B1

Fig.3

Fig.4